# EUROPÄISCHE PATENTSCHRIFT

(11) **EP 4 022 407 B1**
(45) Veröffentlichungstag und Bekanntmachung des Hinweises auf die Patenterteilung: **09.10.2024**
(21) Anmeldenummer: 20760849.8
(22) Anmeldetag: 21.08.2020
(51) Int. Cl.: G05B 19/418

(54) **SYSTEM UND VERFAHREN ZUM ÜBERWACHEN, BETREIBEN UND INSTANDHALTEN EINER INDUSTRIELLEN ANLAGE, INSBESONDERE DER METALLERZEUGENDEN INDUSTRIE ODER DER STAHLINDUSTRIE**
SYSTEM AND METHOD FOR MONITORING, OPERATING AND SERVICING AN INDUSTRIAL SYSTEM, IN PARTICULAR FOR THE METAL PRODUCTION INDUSTRY OR THE STEEL INDUSTRY
SYSTÈME ET PROCÉDÉ POUR SURVEILLER, FAIRE FONCTIONNER ET ENTRETENIR UNE INSTALLATION INDUSTRIELLE, EN PARTICULIER DE L'INDUSTRIE DE LA PRODUCTION DE MÉTAUX OU DE L'INDUSTRIE DE L'ACIER

(30) Priorität: 27.08.2019 DE 102019212852
(43) Veröffentlichungstag der Anmeldung: 06.07.2022
(73) Patentinhaber: SMS group GmbH, 41069 Mönchengladbach (DE)
(72) Erfinder: VOGL, Norbert, 40883 Ratingen (DE)
(74) Vertreter: Kross, Ulrich
(86) Internationale Anmeldenummer: PCT/EP2020/073517
(87) Internationale Veröffentlichungsnummer: WO 2021/037734

(56) Entgegenhaltungen:
- EP-A1- 2 535 781
- DE-A1- 102010 013 885
- US-A1- 2014 306 819
- US-A1- 2017 264 508

## Beschreibung

Die Erfindung betrifft ein System und ein Verfahren zum Überwachen, Betreiben und Instandhalten einer industriellen Anlage, insbesondere der metallerzeugenden Industrie oder der Stahlindustrie.

Die vorliegende Erfindung betrifft insbesondere die Überwachung von Tätigkeiten in und das Betreiben und Instandhalten von industriellen Anlagen wie beispielsweise der metallerzeugenden Industrie oder der Stahlindustrie. Beispiele für derartige industrielle Anlagen sind Hochöfen, Direktreduktionsanlagen, Lichtbogenöfen, Konverter oder Anlagen für Pfannenprozesse, Anlagen zum Ur- oder Umformen von Metallen wie beispielsweise Strang- oder Knüppelgießanlagen und Warm- und/oder Kaltwalzanlagen, Strangpressanlagen, Schmiedemaschinen, ESU-Anlagen, Induktionsofenanlagen oder diesen Anlagen vor- oder nachgelagerten Anlagen wie beispielsweise Kühlstrecken, Beizen oder Glühen.

Die Überwachung und die daraus resultierende Steuerung bzw. Regelung der Betriebsabläufe und Prozesse zum Betreiben und Instandhalten einer industriellen Anlage, insbesondere der metallerzeugenden Industrie oder der Stahlindustrie, sind von hoher Bedeutung, um die Prozesse stabil und wirtschaftlich zu betreiben. Hierbei geht es insbesondere um die Kontrolle der verfahrenstechnischen Abläufe in der industriellen Anlage, bzw. der zugehörigen Maschinen, Aggregate, Bauteile oder anderen Komponenten, sowie deren Überwachung und Instandhaltung. Dazu werden beispielsweise regelmäßige Inspektionen der industriellen Anlage durchgeführt, um den Betrieb der industriellen Anlage zu Überwachen und eventuell notwendige Instandhaltungsmaßnahmen zu identifizieren und nachfolgend auszuführen und ggf. benötigte Ersatzteile zu bestellen. Im Rahmen der Inspektionen werden üblicherweise Messungen in bzw. an der industriellen Anlage durchgeführt und die Messergebnisse mit Sollwerten verglichen. Basierend auf dem Ergebnis des Vergleichs kann der Betrieb der industriellen Anlage angepasst und ggf. Instandhaltungsmaßnahmen durchgeführt werden. Nachteilig daran ist, dass die Ergebnisse erst nach der Inspektion mit den Sollwerten verglichen werden und somit zeitlich versetzt zur Verfügung stehen.

Ferner ist es aus dem Stand der Technik bekannt einzelne Maschinen, Aggregate, Bauteile oder anderen Komponenten mit Sensoren auszustatten und bestimmte Parameter in Echtzeit zu überwachen. So offenbart beispielsweise die DE 10 2012 203 987 A1 ein Verfahren zur Visualisierung eines Prozessablaufes in einer hüttentechnischen Anlage, bei welchem Prozesswerte in Echtzeit ermittelt werden, die Prozesswerte ausgewertet werden, um eine eventuelle Prozessstörung festzustellen und ggf. die betroffenen Komponenten visuell darzustellen. Das Verfahren ist jedoch auf mittels Sensoren ermittelbare Prozesswerte begrenzt und beschränkt sich ferner auf die Erkennung von Prozessstörungen.

Ferner offenbart die EP 2 535 781 A1 ein System und Verfahren zur Datenerfassung in einer industriellen Anlage mittels eines mobilen Endgeräts.

Die DE 10 2010 013 885 A1 offenbart eine mobile Wartungseinheit zur Wartung von Maschinen mit mindestens einer Schnittstelle zum Herstellen einer Verbindung zum Übertragen von Daten- und/oder Messsignalen zwischen der Wartungseinheit und einer zu wartenden Maschine. Die Wartungseinheit umfasst einen Datenspeicher und Mittel zur Erzeugung und Wiedergabe von Informationen. Dabei ist Wartungseinheit dazu konfiguriert durch Erkennen, Identifizieren und Anzeigen eines aktuellen Betriebszustands der Maschine eine Diagnose und/oder Reparatur an der Maschine in Bezug auf einen Normzustand der Maschine schrittweise zu begleiten, zu protokollieren und zu kontrollieren.

Der Erfindung liegt die Aufgabe zugrunde, ein System und Verfahren zum Überwachen, Betreiben und Instandhalten einer industriellen Anlage, insbesondere der metallerzeugenden Industrie oder der Stahlindustrie, mittels welchem die industrielle Anlage in Echtzeit überwacht werden kann und ggf. der Betrieb der Anlage angepasst und/oder Instandhaltungsmaßnahmen veranlasst werden können.

Die Aufgabe wird erfindungsgemäß gelöst durch ein System zum Überwachen, Betreiben und Instandhalten einer industriellen Anlage, insbesondere der metallerzeugenden Industrie oder der Stahlindustrie, umfassend:
wenigstens ein mobiles Endgerät mit wenigstens einem Sensor zur Erfassung von Messwerten innerhalb der industriellen Anlage,
wenigstens einen Positionssensor zur Erfassung der Position des wenigstens einen mobilen Endgeräts in der industriellen Anlage,
eine zentrale Datenverarbeitungseinrichtung zur Verarbeitung der von dem wenigstens einen mobilen Endgerät mittels des wenigstens einen Sensors erfassten Messwerte unter Berücksichtigung der mittels des wenigstens einen Positionssensors erfassten Position des wenigstens einen mobilen Endgeräts in der industriellen Anlage, und
wenigstens ein Kommunikationsnetzwerk zum Austauschen von Daten zwischen dem wenigstens einen mobilen Endgerät, dem wenigstens einen Positionssensor und/oder der zentralen Datenverarbeitungseinrichtung.

Mittels des wenigstens einen mobilen Endgeräts können innerhalb der industriellen Anlage Messwerte erfasst werden. Dazu verfügt das mobile Endgerät über wenigstens einen Sensor. Gleichzeitig mit der Erfassung des Messwerts durch das mobile Endgerät wird die Position des mobilen Endgeräts in der industriellen Anlage durch den wenigstens einen Positionssensor erfasst. Der erfasste Messwert und die erfasste Position werden über ein Kommunikationsnetzwerk an eine zentrale Datenverarbeitungseinrichtung übermittelt. Die zentrale Datenverarbeitungseinrichtung kann den erfassten Messwert unter Berücksichtigung der erfassten Position verarbeiten. Insbesondere kann der erfasste Messwert einem bestimmten Teil der industriellen Anlage zugeordnet werden, wodurch sich von der zentralen Datenverarbeitungseinrichtung weitere Maßnahmen ableiten lassen, wie beispielsweise notwendige Anpassungen an der industriellen Anlage oder erforderliche Instandhaltungsarbeiten. Ferner kann eine Bestellung von benötigten Materialien, insbesondere Verbrauchsmaterialien oder Ersatzteilen, veranlasst werden. Auch lassen sich dadurch Informationen zu dem aktuellen Zustand der industriellen Anlage ableiten, wie beispielsweise die aktuelle Auslastung. Durch die Übertragung der Daten über ein Kommunikationsnetzwerk erfolgt die Verarbeitung der erfassten Messwerte und der erfassten Position zeitnah.

In einer besonders bevorzugten Variante der Erfindung erfolgt die Übermittlung der erfassten Messwerte und der erfassten Position und die nachfolgende Verarbeitung seitens der zentralen Datenverarbeitungseinrichtung in Echtzeit, also unmittelbar aufeinanderfolgend.

Gemäß einer vorteilhaften Variante der Erfindung umfasst das System weiterhin eine Datenbank mit darin gespeicherten Positionsdaten von Maschinen, Aggregaten, Bauteilen oder anderen Komponenten der industriellen Anlage, wobei die zentrale Datenverarbeitungseinrichtung die von dem wenigstens einen mobilen Endgerät mittels des wenigstens einen Sensors erfassten Messwerte durch einen Abgleich von der mittels des wenigstens einen Positionssensors erfassten Position des wenigstens einen mobilen Endgeräts in der industriellen Anlage mit den in der Datenbank gespeicherten Positionsdaten einer Maschine, einem Aggregat, einem Bauteil oder anderen Komponente der industriellen Anlage zuordnen kann. Der Abgleich zwischen der erfassten Position des wenigstens einen mobilen Endgeräts und den in der Datenbank gespeicherten Positionen von Maschinen, Aggregaten, Bauteilen oder anderen Komponenten der industriellen Anlage kann seitens des wenigstens einen mobilen Endgeräts oder der zentralen Datenverarbeitungseinrichtung erfolgen. Die Zuordnung der erfassten Messwerte zu einer Maschine, einem Aggregat, einem Bauteil oder anderen Komponente der industriellen Anlage erfolgt seitens der zentralen Datenverarbeitungseinrichtung, so dass die Informationen zentral zur Verfügung stehen. Durch die Speicherung der Positionsdaten von Maschinen, Aggregaten, Bauteilen oder anderen Komponenten der industriellen Anlage lassen sich die erfassten Messwerte einfacher und besser zuordnen, wodurch sich die Genauigkeit des Systems verbessert. Auf die Datenbank kann zumindest die zentrale Datenverarbeitungseinrichtung zugreifen, ggf. auch das wenigstens eine mobile Endgerät falls beispielsweise der Abgleich der erfassten Position des wenigstens einen mobilen Endgeräts mit den in der Datenbank gespeicherten Positionsdaten von Maschinen, Aggregaten, Bauteilen oder anderen Komponenten der industriellen Anlage seitens des wenigstens einen mobilen Endgeräts erfolgt. Erfolgt der Zugriff auf die Datenbank nur durch die zentrale Datenverarbeitungseinrichtung, so kann die Datenbank auch in die zentrale Datenverarbeitungseinrichtung integriert werden.

Nach einer zweckmäßigen Variante sind in der Datenbank ferner Abmessungen von den Maschinen, Aggregaten, Bauteilen oder anderen Komponenten der industriellen Anlage gespeichert. So können bei größeren Maschinen, Aggregaten, Bauteilen oder anderen Komponenten, wie sie häufig in industriellen Anlagen vorkommen, die erfassten Messwerte genauer zugeordnet werden. Beispielsweise kann eine Warm- oder Kaltwalzanlage mehrere Meter lang sein und durch die Speicherung der Abmessungen der Warm- oder Kaltwalzanlage in der Datenbank können die erfassten Messwerte über die gleichzeitig erfasste Position des wenigstens einen mobilen Endgeräts genauer einem Abschnitt der Warm- oder Kaltwalzanlage zugeordnet werden.

In einer vorteilhaften Variante der Erfindung ist der wenigstens eine Positionssensor in dem wenigstens einen mobilen Endgerät integriert. Dadurch kann das wenigstens eine mobile Endgerät eine gleichzeitige Erfassung des Messwerts und der Position veranlassen.

Gemäß einer zweckmäßigen Variante der Erfindung ist der Sensor des wenigstens einen mobilen Endgeräts eine Kamera, eine Wärmebildkamera, ein Gasmessgerät, ein Temperaturmessgerät, ein Druckmessgerät, ein Distanzmessgerät oder ein vergleichbarer Sensor. Die mittels der Sensoren erfassten Messwerte umfassen beispielsweise: physikalische Messwerte wie Temperatur, Gewicht, oder dergleichen; Bilder; Filme; Tonaufnahmen; Texte; und/oder Kombinationen daraus.

Nach einer weiteren zweckmäßigen Variante der Erfindung ist der wenigstens eine Sensor in dem mobilen Endgerät integriert oder mit diesem verbindbar.

Das wenigstens eine mobile Endgerät ist nach einer Variante der Erfindung als Smartphone oder Tablet ausgebildet. Derartige mobile Endgeräte enthalten beispielsweise eine Kamera und/oder Mikrofon als Sensoren. Die nicht in dem mobilen Endgerät enthaltenen, aber benötigten Sensoren, sind zweckmäßigerweise mit dem mobilen Endgerät über eine Schnittstelle verbindbar.

In einer bevorzugten Variante der Erfindung sind in der zentralen Datenverarbeitungseinrichtung und/oder der Datenbank Konstruktionspläne, Messdatenhistorien, Wartungsinformationen, Fehlermeldungen, Bestelllisten und/oder dergleichen zu der industriellen Anlagen und/oder Maschinen, Aggregaten, Bauteilen oder anderen Komponenten der industriellen Anlage gespeichert. Mittels dieser gespeicherten Informationen lassen sich die erfassten Messwerte besser interpretieren und es können einfacher erforderliche oder vorteilhafte Aktionen bestimmen.

Gemäß der Erfindung ist die zentrale Datenverarbeitungseinrichtung ausgebildet, um Informationen an das wenigstens eine mobile Endgerät zu übermitteln, um die übermittelten Informationen dem Benutzer des wenigstens einen mobilen Endgeräts bereitzustellen. Somit können die von der zentralen Datenverarbeitungseinrichtung aufbereiteten Informationen dem Benutzer des wenigstens einen mobilen Endgeräts zur Verfügung gestellt werden. Dies erfolgt beispielsweise visuell, haptisch und/oder akustisch. Somit erhält der Nutzer des wenigstens einen mobilen Endgeräts eine unmittelbare bzw. zeitnahe Rückmeldung zu den erfassten Messwerten und kann eventuell erforderlichen Aktionen durchführen oder veranlassen.

Nach der Erfindung erstellt die zentrale Datenverarbeitungseinrichtung einen Tätigkeitsplan für den Benutzer des wenigstens einen mobilen Endgeräts und überträgt diesen an das wenigstens eine mobile Endgerät. Der Tätigkeitsplan basiert dabei auf den erfassten Messwerten und gibt dem Benutzer Hinweise auf durchzuführende Tätigkeiten, um den Betrieb der industriellen Anlage zu gewährleisten oder zu verbessern oder die industrielle Anlage instand zu halten.

Gemäß der Erfindung ist das wenigstens eine mobile Endgerät ausgebildet, um eine Kommunikation zwischen der industriellen Anlage und/oder Maschinen, Aggregaten, Bauteilen oder anderen Komponenten der industriellen Anlage und der zentralen Datenverarbeitungseinrichtung bereitzustellen. Dadurch kann die zentrale Datenverarbeitungseinrichtung beispielsweise über das wenigstens eine mobile Endgerät Veränderung von Stellgrößen in der industriellen Anlage vornehmen, insbesondere als Reaktion auf die erfassten Messwerte.

Die Aufgabe wird ferner erfindungsgemäß gelöst durch ein Verfahren zum Überwachen, Betreiben und Instandhalten einer industriellen Anlage, insbesondere der metallerzeugenden Industrie oder der Stahlindustrie, umfassend die Schritte:
Erfassen von Messwerten innerhalb der industriellen Anlage mittels eines mobilen Endgeräts,
Erfassen der Position des mobilen Endgeräts in der industriellen Anlage zum Zeitpunkt der Messwerterfassung,
Übermitteln der erfassten Messwerte und der zugehörigen erfassten Positionen von dem mobilen Endgerät an eine zentralen Datenverarbeitungseinrichtung, und
Verarbeitung der erfassten Messwerte unter Berücksichtigung der zugehörigen erfassten Positionen durch die zentrale Datenverarbeitungseinrichtung, insbesondere Zuordnen der Messwerte zu Teilen der industriellen Anlage.

Es werden also erfindungsgemäß Messwerte in einer industriellen Anlage mittels eines mobilen Endgeräts erfasst. Zum Zeitpunkt der Messwerterfassung wird auch die Position des mobilen Endgeräts in der industriellen Anlage erfasst. Der erfasste Messwert und die zugehörige erfasste Position werden an eine zentrale Datenverarbeitungsstelle übermittelt, welche die erfassten Messwerte unter Berücksichtigung der erfassten Position verarbeitet. Insbesondere wird dabei der erfasste Messwert einem Teil der industriellen Anlage zugeordnet. Aus dem verarbeiteten Messwert und der zugehörigen Position kann die zentrale Datenverarbeitungseinrichtung weitere Informationen und/oder Maßnahmen ableiten, wie dem aktuellen Zustand der industriellen Anlage, Auslastung der industriellen Anlage, durchzuführenden Instandhaltungsmaßnahmen, Anpassungen im Betrieb der industriellen Anlage, Veranlassen von Bestellungen oder dergleichen.

In einer bevorzugten Variante der Erfindung umfasst das Verfahren weiterhin die Schritte:
Speichern von Positionsdaten von Maschinen, Aggregaten, Bauteilen oder anderen Komponenten der industriellen Anlage,
Vergleichen der erfassten Positionen mit den gespeicherten Positionsdaten, und
Zuordnen der erfassten Messwerte zu den Maschinen, Aggregaten, Bauteilen oder anderen Komponenten der industriellen Anlage auf Basis des Vergleichs der Positionsdaten.

Insbesondere größere industrielle Anlagen umfassen mehrere Maschinen, Aggregate, Bauteile oder andere Komponenten. Durch Speichern der Positionsdaten dieser Maschinen, Aggregate, Bauteile oder anderer Komponenten und nachfolgendem Vergleich mit den erfassten Positionen während der Messwerterfassung lassen sich die erfassten Messwerte den Maschinen, Aggregaten, Bauteilen oder anderen Komponenten exakt zuordnen. Dadurch erhöht sich die Genauigkeit des erfindungsgemäßen Verfahrens.

Nach einer Variante der Erfindung werden neben den Positionsdaten auch die Abmessungen der Maschinen, Aggregate, Bauteile oder andere Komponenten der industriellen Anlage gespeichert. Dies ist insbesondere bei größeren Maschinen, Aggregaten, Bauteilen oder anderen Komponenten vorteilhaft, da die erfassten Messwerte dadurch einem Teil der Maschine, des Aggregat, des Bauteils oder der anderen Komponente zugeordnet werden können.

Gemäß einer zweckmäßigen Variante der Erfindung erfolgt die Speicherung in der zentralen Datenverarbeitungseinrichtung und/oder einer separaten Datenbank. Die Speicherung in einer separaten Datenbank ist bevorzugt, wenn die mobilen Endgeräte auf die gespeicherten Informationen in der Datenbank zugreifen sollen. Erfolgt der zugriff auf die gespeicherten Informationen nur durch die zentrale Datenverarbeitungseinrichtung, so kann die Speicherung direkt in der zentralen Datenverarbeitungseinrichtung erfolgen. Die Datenbank kann auch in die zentrale Datenverarbeitungseinrichtung integriert sein, wobei die zentrale Datenverarbeitungseinrichtung einen Zugriff auf die Datenbank ermöglicht, so dass beispielsweise die mobilen Endgeräte auf die Datenbank zugreifen können.

In einer bevorzugten Variante der Erfindung erfolgt die Erfassung der Position des mobilen Endgeräts mittels eines in dem mobilen Endgerät integrierten Positionssensors. Dadurch kann die Erfassung des Messwerts und die gleichzeitige Erfassung der Position vom mobilen Endgerät vorgenommen werden, so dass dies synchron erfolgt.

Nach einer zweckmäßigen Variante der Erfindung erfolgt die Erfassung der Messwerte mittels einer Kamera, einer Wärmebildkamera, eines Gasmessgeräts, eines Temperaturmessgeräts, eines Druckmessgeräts, eines Distanzmessgeräts oder eines vergleichbaren Sensors.

Gemäß einer weiteren zweckmäßigen Variante ist der Sensor zur Messwerterfassung in dem mobilen Endgerät integriert oder mit diesem verbindbar.

In einer besonders vorteilhaften Variante der Erfindung erfolgt die Übermittlung der erfassten Messwerte und der zugehörigen Positionen in Echtzeit. Die Messergebnisse stehen der zentralen Datenverarbeitungseinrichtung also unmittelbar nach deren Erfassung zur weiteren Verarbeitung bereit. Dadurch kann die zentrale Datenverarbeitungseinrichtung kurzfristig die Messergebnisse verarbeiten, bewerten und entsprechende weitere Maßnahmen veranlassen.

Nach einer zweckmäßigen Variante der Erfindung umfassen die erfassten Messwerte: physikalische Messwerte wie Temperatur, Gewicht, oder dergleichen; Bilder; Filme; Tonaufnahmen; Texte; und/oder Kombinationen daraus.

Gemäß einer erfindungsgemäßen Variante umfasst das Verfahren weiterhin den Schritt des Speicherns von Konstruktionsplänen, Messdatenhistorien, Wartungsinformationen, Fehlermeldungen, Bestelllisten und/oder dergleichen zu der industriellen Anlage und/oder Maschinen, Aggregaten, Bauteilen oder anderen Komponenten der industriellen Anlage. Mittels dieser gespeicherten Informationen lassen sich die erfassten Messwerte besser interpretieren und es können einfacher erforderliche oder vorteilhafte Aktionen bestimmt werden.

Erfindungsgemäß umfasst das Verfahren weiterhin den Schritt des Übermittelns von Informationen von der zentralen Datenverarbeitungseinrichtung an das mobile Endgerät, um die übermittelten Informationen dem Benutzer des mobilen Endgeräts bereitzustellen. Die Anzeige der Informationen kann beispielsweise visuell, haptisch und/oder akustisch erfolgen. Das erfindungsgemäße Verfahren umfasst ferner den Schritt des Erstellens eines Tätigkeitsplans für den Benutzer des mobilen Endgeräts und Übermitteln des erstellten Tätigkeitsplans an das mobile Endgerät. Dadurch können dem Benutzer des mobilen Endgeräts Informationen und/oder Anweisungen als Antwort auf den erfassten Messwert bereitgestellt werden und der Benutzer kann entsprechend notwendige Tätigkeiten ausführen, wobei der Benutzer dabei durch die angezeigten Informationen von dem mobilen Endgerät unterstützt wird.

Gemäß der Erfindung umfasst das Verfahren weiterhin den Schritt des Übertragens von Daten von der zentralen Datenverarbeitungseinrichtung über das mobile Endgerät an die industrielle Anlage und/oder Maschinen, Aggregaten, Bauteilen oder anderen Komponenten der industriellen Anlage. Dadurch kann die zentrale Datenverarbeitungseinrichtung unmittelbar die industrielle Anlage konfigurieren, insbesondere als Reaktion auf die erfassten Messwerte.

In einer weiteren erfindungsgemäßen Variante umfasst das Verfahren weiterhin den Schritt des Durchführens einer Inspektion der industriellen Anlage entlang eines vorgegebenen Wegs durch die industrielle Anlage und Erfassen von Messwerten an vorgegebenen Positionen innerhalb der industriellen Anlage. Das erfindungsgemäße Verfahren ermöglicht somit die Durchführung einer genau definierten Inspektion der industriellen Anlage und kann die Durchführung durch Auswertung der erfassten Messwerte und Positionen überprüfen.

Nach einer vorteilhaften Variante umfasst das erfindungsgemäße Verfahren weiterhin den Schritt des kontinuierlichen Überwachens der Position des mobilen Endgeräts in der industriellen Anlage. Dabei werden die Positionsdaten beispielsweise kontinuierlich an die zentrale Datenverarbeitungseinrichtung übermittelt, so dass diese jederzeit über die Positionen der mobilen Endgeräte und deren Benutzer in der industriellen Anlage informiert ist. Gemäß einer vorteilhaften Variante der Erfindung umfasst das Verfahren weiterhin den Schritt des Anzeigens einer Warnung seitens der zentralen Datenverarbeitungseinrichtung und/oder des mobilen Endgeräts wenn sich das mobile Endgerät in einem als sicherheitskritisch eingestuften Bereich der industriellen Anlage befindet. Dazu werden seitens der zentralen Datenverarbeitungseinrichtung und/oder des mobilen Endgeräts die kontinuierlich erfassten Positionsdaten mit den Positionsdaten von als sicherheitskritisch eingestuften Bereichen der industriellen Anlage verglichen.

Nachfolgend wird die Erfindung anhand von in den beigefügten Figuren dargestellten Ausführungsbeispielen näher erläutert. Es zeigen:
- Fig. 1: eine schematische Ansicht eines Ausführungsbeispiels eines erfindungsgemäßen Systems, und
- Fig. 2: eine Prinzipskizze eines erfindungsgemäßen Verfahrens zur Durchführung einer Inspektion einer industriellen Anlage.

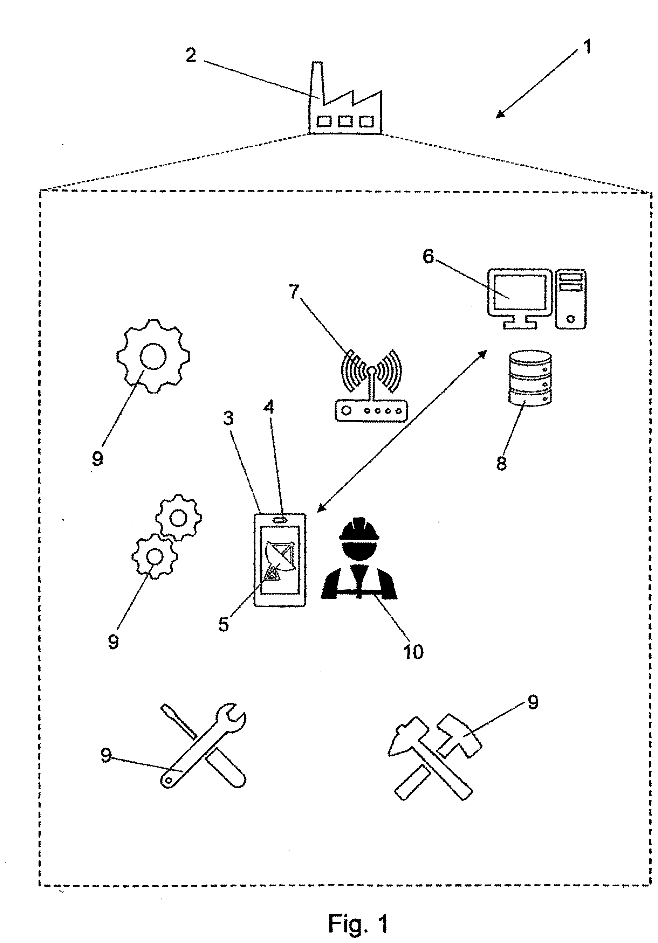

Fig. 1 zeigt eine schematische Ansicht eines Ausführungsbeispiels eines erfindungsgemäßen Systems 1 zum Überwachen, Betreiben und Instandhalten einer industriellen Anlage 2, insbesondere der metallerzeugenden Industrie oder der Stahlindustrie.

Das System 1 aus Fig. 1 umfasst ein mobiles Endgerät 3 mit wenigstens einem Sensor 4 zur Erfassung von Messwerten innerhalb der industriellen Anlage 2. Das mobile Endgerät 3 aus Fig. 1 ist beispielsweise als Smartphone ausgebildet. Bei dem Sensor 4 handelt es sich beispielsweise um eine in dem mobilen Endgerät 3 integrierte Kamera. Ferner kann es sich bei dem Sensor 4 um eine Wärmebildkamera, ein Gasmessgerät, ein Temperaturmessgerät, ein Druckmessgerät, ein Distanzmessgerät, ein Mikrofon oder einen vergleichbaren Sensor 4 handeln. Die unterschiedlichen Sensoren 4 können in dem mobilen Endgerät 3 integriert sein oder mit diesem verbindbar. Die mittels der Sensoren 4 erfassten Messwerte umfassen beispielsweise physikalische Messwerte wie Temperatur, Gewicht, oder dergleichen; Bilder; Filme; Tonaufnahmen; Texte; und/oder Kombinationen daraus.

Das System 1 umfasst ferner einen Positionssensor 5 zur Erfassung der Position des mobilen Endgeräts 3. Gemäß dem Ausführungsbeispiel aus Fig. 1 ist der Positionssensor 5 in dem mobilen Endgerät 3 integriert. Alternativ kann es sich bei dem Positionssensor 5 auch um ein separates Element handeln, beispielsweise um ein Sensornetz zur Positionserfassung.

Das System 1 aus Fig. 1 umfasst ferner eine zentrale Datenverarbeitungseinrichtung 6 zur Verarbeitung der von dem mobilen Endgerät 3 mittels des wenigstens einen Sensors 4 erfassten Messwerte unter Berücksichtigung der mittels des Positionssensors 5 erfassten Position des mobilen Endgeräts 3 in der industriellen Anlage 2.

Ferner umfasst das System 1 ein Kommunikationsnetzwerk 7 zum Austauschen von Daten zwischen dem mobilen Endgerät 3 und der zentralen Datenverarbeitungseinrichtung 6. Der Datenaustausch zwischen dem mobilen Endgerät 3, dem Positionssensor 5 und der zentralen Datenverarbeitungseinrichtung 6 erfolgt vorzugsweise in Echtzeit.

Das System aus Fig. 1 umfasst ferner eine Datenbank 8 mit darin gespeicherten Positionsdaten von Maschinen 9, Aggregaten 9, Bauteilen 9 oder anderen Komponenten 9 der industriellen Anlage 2. Die Maschinen 9, Aggregate 9, Bauteile 9 und anderen Komponenten 9 sind in Fig. 1 durch Zahnräder und Werkzeuge symbolisiert. Die zentrale Datenverarbeitungseinrichtung 6 gleicht die von dem Positionssensor 5 erfasste Position des mobilen Endgeräts 3 mit den in der Datenbank 8 gespeicherten Positionsdaten ab und ordnet basierend auf dem Ergebnis des Abgleichs die von dem Sensor 4 erfassten Messwerte einer Maschine 9, einem Aggregat 9, einem Bauteil 9 oder einer anderen Komponente 9 der industriellen Anlage 2 zu.

In der Datenbank 8 können ferner Abmessungen von den Maschinen 9, Aggregaten 9, Bauteilen 9 oder anderen Komponenten 9 der industriellen Anlage 2 gespeichert sein. Dadurch können die erfassten Messwerte Bereichen dieser Maschinen 9, Aggregate 9, Bauteile 9 und anderen Komponenten 9 zugeordnet werden.

Die Datenbank 8 kann in die zentrale Datenverarbeitungseinrichtung 6 integriert sein oder als selbstständige Komponente in der industriellen Anlage 2 angeordnet sein, wobei die Datenbank 8 im letzteren Fall über das Kommunikationsnetzwerk 7 erreichbar ist.

In der zentralen Datenverarbeitungseinrichtung 6 und/oder der Datenbank 8 können ferner Konstruktionspläne, Messdatenhistorien, Wartungsinformationen, Fehlermeldungen, Bestelllisten und/oder dergleichen zu der industriellen Anlage 2 und/oder Maschinen 9, Aggregaten 9, Bauteilen 9 oder anderen Komponenten 9 der industriellen Anlage 2 gespeichert sein. Diese werden vorzugsweise bei der Auswertung der erfassten Messwerte berücksichtigt.

Die zentrale Datenverarbeitungseinrichtung 6 ist dazu ausgebildet, um Informationen an das mobile Endgerät 3 zu übermitteln, um die übermittelten Informationen dem Benutzer 10 des mobilen Endgeräts 3 bereitzustellen. Erfindungsgemäß erstellt die zentrale Datenverarbeitungseinrichtung 6 einen Tätigkeitsplan für den Benutzer 10 des mobilen Endgeräts 3 und überträgt diesen an das mobile Endgerät 3.

Erfindungsgemäß ist das mobile Endgerät 3 ferner ausgebildet eine Kommunikation zwischen der industriellen Anlage 2 und/oder Maschinen 9, Aggregaten 9, Bauteilen 9 oder anderen Komponenten 9 der industriellen Anlage 2 und der zentralen Datenverarbeitungseinrichtung 6 bereitzustellen. Dadurch kann die zentrale Datenverarbeitungseinrichtung 6 beispielsweise auf Basis der erfassten Messwerte direkt Anpassungen an der industriellen Anlage 2 und/oder Maschinen 9, Aggregaten 9, Bauteilen 9 oder anderen Komponenten 9 der industriellen Anlage 2 vornehmen.

Mittels des erfindungsgemäßen Systems 1 lässt sich ein Verfahren zum Überwachen, Betreiben und Instandhalten einer industriellen Anlage 2, insbesondere der metallerzeugenden Industrie oder der Stahlindustrie, ausführen. Das Verfahren umfasst die Schritte:
Erfassen von Messwerten innerhalb der industriellen Anlage 2 mittels eines mobilen Endgeräts 3,
Erfassen der Position des mobilen Endgeräts 3 in der industriellen Anlage 2 zum Zeitpunkt der Messwerterfassung,
Übermitteln der erfassten Messwerte und der zugehörigen erfassten Positionen von dem mobilen Endgerät 3 an eine zentralen Datenverarbeitungseinrichtung 6,
Verarbeitung der erfassten Messwerte unter Berücksichtigung der zugehörigen erfassten Positionen durch die zentrale Datenverarbeitungseinrichtung 6, insbesondere Zuordnen der Messwerte zu Teilen der industriellen Anlage 2.

Das Verfahren kann weiterhin die folgenden Schritte umfassen:
Speichern von Positionsdaten von Maschinen 9, Aggregaten 9, Bauteilen 9 oder anderen Komponenten 9 der industriellen Anlage 2,
Vergleichen der erfassten Positionen mit den gespeicherten Positionsdaten, und
Zuordnen der erfassten Messwerte zu den Maschinen 9, Aggregaten 9, Bauteilen 9 oder anderen Komponenten 9 der industriellen Anlage 2 auf Basis des Vergleichs der Positionsdaten.
Zusätzlich zu den Positionsdaten können auch die Abmessungen der Maschinen 9, Aggregate 9, Bauteile 9 oder der anderen Komponenten 9 der industriellen Anlage 9 gespeichert werden. Dies ermöglicht eine bessere Zuordnung, insbesondere für größere Maschinen 9, Aggregate 9, Bauteile 9 oder andere Komponenten 9. Ferner können auch Konstruktionspläne, Messdatenhistorien, Wartungsinformationen, Fehlermeldungen, Bestelllisten und/oder dergleichen zu der industriellen Anlage 2 und/oder Maschinen 9, Aggregaten 9, Bauteilen 9 oder anderen Komponenten 9 der industriellen Anlage 2 in der zentralen Datenverarbeitungseinrichtung 6 und/oder der Datenbank 8 gespeichert werden.

Die vorgenannte Speicherung erfolgt in der zentralen Datenverarbeitungseinrichtung 6 und/oder einen separaten Datenbank 8.

Die Positionserfassung des mobilen Endgeräts 3 erfolgt vorzugsweise mittels eines in dem mobilen Endgerät 3 integrierten Positionssensors 5. Die Messwerterfassung erfolgt beispielsweise mittels einer Kamera, einer Wärmebildkamera, eines Gasmessgeräts, eines Temperaturmessgeräts, eines Druckmessgeräts, eines Distanzmessgeräts, eines Mikrofons oder eines vergleichbaren Sensors 4. Der Sensor 4 kann dabei in dem mobilen Endgerät 3 integriert sein oder mit diesem verbindbar. Die mittels des Sensors erfassten Messwerte umfassen beispielsweise physikalische Messwerte wie Temperatur, Gewicht, oder dergleichen; Bilder; Filme; Tonaufnahmen; Texte; und/oder Kombinationen daraus.

Die Übermittlung der erfassten Messwerte und der erfassten zugehörigen Position erfolgt in Echtzeit, also ohne nennenswerte Verzögerung.

Ferner umfasst das erfindungsgemäße Verfahren den Schritt des Übermittelns von Informationen von der zentralen Datenverarbeitungseinrichtung 6 an das mobile Endgerät 3, um die übermittelten Informationen dem Benutzer 10 des mobilen Endgeräts 3 bereitzustellen. Gemäß der Erfindung wird von der zentralen Datenverarbeitungseinrichtung 6 ein Tätigkeitsplan für den Benutzer 10 des mobilen Endgeräts 3 erstellt und dieser wird an das mobile Endgerät 3 übermittelt, um den Tätigkeitsplan dem Benutzer 10 des mobilen Endgeräts 3 anzuzeigen.

Erfindungsgemäß umfasst das Verfahren den Schritt des Übertragens von Daten von der zentralen Datenverarbeitungseinrichtung 6 über das mobile Endgerät 3 an die industrielle Anlage 2 und/oder Maschinen 9, Aggregate 9, Bauteile 9 oder andere Komponenten 9 der industriellen Anlage 2.

Mittels des erfindungsgemäßen Verfahrens kann kontinuierlich die Position des mobilen Endgeräts 3 in der industriellen Anlage 2 überwacht werden, wodurch beispielsweise seitens der zentralen Datenverarbeitungseinrichtung 6 und/oder des mobilen Endgeräts 3 eine Warnung angezeigt werden kann, wenn sich das mobile Endgerät 3 in einem als sicherheitskritisch eingestuften Bereich der industriellen Anlage 2 befindet.

Das erfindungsgemäße Verfahren kann insbesondere zur Durchführung einer Inspektion der industriellen Anlage entlang eines vorgegebenen Wegs 11 durch die industrielle Anlage 2 genutzt werden, wobei an vorgegebenen Positionen innerhalb der industriellen Anlage 2 Messwerte erfasst werden.

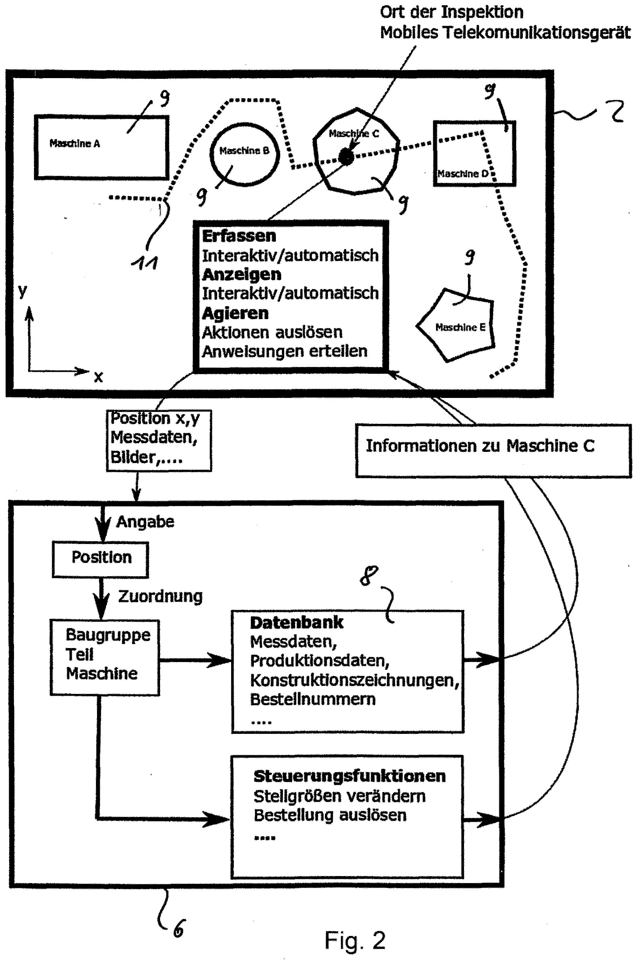

Fig. 2 zeigt eine Prinzipskizze eines erfindungsgemäßen Verfahrens zur Durchführung einer Inspektion einer industriellen Anlage 2 entlang eines vorgegebenen Wegs 11. Der Benutzer 10 mit dem mobilen Endgerät 3 bewegt sich durch die industrielle Anlage 2 entlang des vorgegebenen Wegs 11. Der vorgegebene Weg 11 verläuft innerhalb der industriellen Anlage 2 entlang der Maschinen A bis E. In dem in Fig. 2 dargestellten Beispiel befindet sich der Benutzer 10 an der Maschine C.

Der Benutzer 10 erfasst mittels des mobilen Endgeräts 3, insbesondere mittels zugehöriger Sensoren 4, Messwerte in der industriellen Anlage 2. Die ermittelten Messwerte werden insbesondere im Bereich der Maschinen A bis E erfasst. Gleichzeitig wird die Position des mobilen Endgerät 3 in der industriellen Anlage 2 mittels eines Positionssensors 5 erfasst.

Der erfasste Messwert und die zugehörige Position werden an die zentrale Datenverarbeitungseinrichtung 6 übermittelt. Dort findet ein Abgleich der erfassten Positionsdaten mit in einer Datenbank 8 gespeicherten Positionsdaten statt, wodurch in dem Beispiel aus Fig. 2 die erfassten Messwerte der Maschine C zugeordnet werden können.

Die zentrale Datenverarbeitungseinrichtung 6 kann die erfassten Messwerte auswerten und dadurch Aktionen ableiten, wie beispielsweise eine Veränderung von Stellgrößen an der Maschine C oder das Veranlassen einer Bestellung von Ersatzteilen oder Verbrauchsmaterialien. Die angepassten Stellgrößen werden an das mobile Endgerät 3 übermittelt und dem Benutzer 10 angezeigt oder direkt über das mobile Endgerät 3 an die Maschine C übertragen.

Grundsätzlich kann die zentrale Datenverarbeitungseinrichtung 6 Daten an das mobile Endgerät 3 übermitteln, welche dem Benutzer 10 angezeigt werden oder direkt Aktionen des mobilen Endgeräts 3 veranlassen. Beispielsweise kann dem Benutzer 10 ein Konstruktionsplan der Maschine C angezeigt werden, wodurch der Benutzer 10 einfacher Eingriffe an der Maschine C vornehmen kann.

### Bezugszeichenliste

- 1: System
- 2: industrielle Anlage
- 3: mobiles Endgerät
- 4: Sensor
- 5: Positionssensor
- 6: zentrale Datenverarbeitungseinrichtung
- 7: Kommunikationsnetzwerk
- 8: Datenbank
- 9: Maschine, Aggregat, Bauteil, Komponente
- 10: Benutzer
- 11: vorgegebener Weg

## Patentansprüche

1. System (1) zum Überwachen, Betreiben und Instandhalten einer industriellen Anlage (2), insbesondere der metallerzeugenden Industrie oder der Stahlindustrie, umfassend:
wenigstens ein mobiles Endgerät (3) mit wenigstens einem Sensor (4) zur Erfassung von Messwerten innerhalb der industriellen Anlage (2),
wenigstens einen Positionssensor (5) zur Erfassung der Position des wenigstens einen mobilen Endgeräts (3) in der industriellen Anlage (2),
eine zentrale Datenverarbeitungseinrichtung (6) zur Verarbeitung der von dem wenigstens einen mobilen Endgerät (3) mittels des wenigstens einen Sensors (4) erfassten Messwerte unter Berücksichtigung der mittels des wenigstens einen Positionssensors (5) erfassten Position des wenigstens einen mobilen Endgeräts (3) in der industriellen Anlage (2), und
wenigstens ein Kommunikationsnetzwerk (7) zum Austauschen von Daten zwischen dem wenigstens einen mobilen Endgerät (3), dem wenigstens einen Positionssensor (5) und/oder der zentralen Datenverarbeitungseinrichtung (6), wobei
die zentrale Datenverarbeitungseinrichtung (6) ausgebildet ist einen Tätigkeitsplan für den Benutzer (10) des wenigstens einen mobilen Endgeräts (3) zu erstellen und an das wenigstens eine mobile Endgerät (3) zu übermitteln, um den übermittelten Tätigkeitsplan dem Benutzer (10) des wenigstens einen mobilen Endgeräts (3) bereitzustellen,
**dadurch gekennzeichnet, dass** der Tätigkeitsplan auf den erfassten Messwerten basiert und dem Benutzer (10) Hinweise auf durchzuführende Tätigkeiten gibt, um den Betrieb der industriellen Anlage (2) zu gewährleisten oder zu verbessern oder die industrielle Anlage (2) instand zu halten, und
dadurch, dass
das wenigstens eine mobile Endgerät (3) ausgebildet ist eine Kommunikation zwischen der industriellen Anlage (2) und/oder Maschinen (9), Aggregaten (9), Bauteilen (9) oder anderen Komponenten (9) der industriellen Anlage (2) und der zentralen Datenverarbeitungseinrichtung (6) bereitzustellen, wodurch die zentrale Datenverarbeitungseinrichtung (6) unmittelbar die industrielle Anlage (2) als Reaktion auf die erfassten Messwerte konfigurieren kann.

2. System (1) nach Anspruch 1,
weiterhin umfassend eine Datenbank (8) mit darin gespeicherten Positionsdaten von Maschinen (9), Aggregaten (9), Bauteilen (9) oder anderen Komponenten (9) der industriellen Anlage (2), wobei die zentrale Datenverarbeitungseinrichtung (6) die von dem wenigstens einen mobilen Endgerät (3) mittels des wenigstens einen Sensors (4) erfassten Messwerte durch einen Abgleich von der mittels des wenigstens einen Positionssensors (5) erfassten Position des wenigstens einen mobilen Endgeräts (3) in der industriellen Anlage (2) mit den in der Datenbank (8) gespeicherten Positionsdaten einer Maschine (9), einem Aggregat (9), einem Bauteil (9) oder anderen Komponente (9) der industriellen Anlage (2) zuordnen kann.

3. System (1) nach Anspruch 2,
wobei in der Datenbank (8) ferner Abmessungen von den Maschinen (9), Aggregaten (9), Bauteilen (9) oder anderen Komponenten (9) der industriellen Anlage (2) gespeichert sind.

4. System (1) nach Anspruch 2 oder Anspruch 3,
wobei der wenigstens eine Positionssensor (5) in dem wenigstens einen mobilen Endgerät (3) integriert ist.

5. System (1) nach einem der Ansprüche 1 bis 4,
wobei der Sensor (4) des wenigstens einen mobilen Endgeräts (3) eine Kamera, eine Wärmebildkamera, ein Gasmessgerät, ein Temperaturmessgerät, ein Druckmessgerät, ein Distanzmessgerät oder ein vergleichbarer Sensor (4) ist.

6. System (1) nach einem der Ansprüche 1 bis 5,
wobei der wenigstens eine Sensor (4) in dem mobilen Endgerät (3) integriert ist oder mit diesem verbindbar ist.

7. System (1) nach einem der Ansprüche 1 bis 6,
wobei in der zentralen Datenverarbeitungseinrichtung (6) und/oder der Datenbank (8) Konstruktionspläne, Messdatenhistorien, Wartungsinformationen, Fehlermeldungen, Bestelllisten und/oder dergleichen zu der industriellen Anlagen (2) und/oder Maschinen (9), Aggregaten (9), Bauteilen (9) oder anderen Komponenten (9) der industriellen Anlage (2) gespeichert sind.

8. Verfahren zum Überwachen, Betreiben und Instandhalten einer industriellen Anlage (2), insbesondere der metallerzeugenden Industrie oder der Stahlindustrie, umfassend die Schritte:
Erfassen von Messwerten innerhalb der industriellen Anlage (2) mittels eines mobilen Endgeräts (3),
Erfassen der Position des mobilen Endgeräts (3) in der industriellen Anlage (2) zum Zeitpunkt der Messwerterfassung,
Übermitteln der erfassten Messwerte und der zugehörigen erfassten Positionen von dem mobilen Endgerät (3) an eine zentrale Datenverarbeitungseinrichtung (6),
Verarbeitung der erfassten Messwerte unter Berücksichtigung der zugehörigen erfassten Positionen durch die zentrale Datenverarbeitungseinrichtung (6), insbesondere Zuordnen der Messwerte zu Teilen der industriellen Anlage (2)
Erstellen eines Tätigkeitsplans für den Benutzer (10) des mobilen Endgeräts (3) durch die zentrale Datenverarbeitungseinrichtung (6) und Übermitteln des erstellten Tätigkeitsplans an das mobile Endgerät (3), um den übermittelten Tätigkeitsplan dem Benutzer (10) des mobilen Endgeräts (3) bereitzustellen,
**gekennzeichnet durch** U
Basieren der Tätigkeitsplan auf den erfassten Messwerten und dem Benutzer (10) Hinweise auf durchzuführende Tätigkeiten geben, um den Betrieb der industriellen Anlage (2) zu gewährleisten oder zu verbessern oder die industrielle Anlage (2) instand zu halten, und durch Übertragen von Daten von der zentralen Datenverarbeitungseinrichtung (6) über das mobile Endgerät (3) an die industrielle Anlage (2) und/oder Maschinen (9), Aggregaten (9), Bauteilen (9) oder anderen Komponenten (9) der industriellen Anlage (2), wodurch die zentrale Datenverarbeitungseinrichtung (6) unmittelbar die industrielle Anlage (2) als Reaktion auf die erfassten Messwerte konfigurieren kann.

9. Verfahren nach Anspruch 8,
weiterhin umfassend die Schritte:
Speichern von Positionsdaten von Maschinen (9), Aggregaten (9), Bauteilen (9) oder anderen Komponenten (9) der industriellen Anlage (2),
Vergleichen der erfassten Positionen mit den gespeicherten Positionsdaten, und
Zuordnen der erfassten Messwerte zu den Maschinen (9), Aggregaten (9), Bauteilen (9) oder anderen Komponenten (9) der industriellen Anlage (2) auf Basis des Vergleichs der Positionsdaten.

10. Verfahren nach Anspruch 9,
wobei zusätzlich zu den Positionsdaten die Abmessungen der Maschinen (9), Aggregate (9), Bauteile (9) oder anderen Komponenten (9) der industriellen Anlage (2) gespeichert werden.

11. Verfahren nach einem der Ansprüche 8 bis 10,
wobei die Übermittlung der erfassten Messwerte und der erfassten zugehörigen Positionen in Echtzeit erfolgt.

12. Verfahren nach einem der Ansprüche 8 bis 11,
weiterhin umfassend den Schritt des Durchführens einer Inspektion der industriellen Anlage (2) entlang eines vorgegebenen Wegs (11) durch die industrielle Anlage (2) und Erfassen von Messwerten an vorgegebenen Positionen innerhalb der industriellen Anlage (2).

13. Verfahren nach einem der Ansprüche 8 bis 12,
weiterhin umfassend den Schritt des kontinuierlichen Überwachens der Position des mobilen Endgeräts (3) in der industriellen Anlage (2), insbesondere umfassend den Schritt des Anzeigens einer Warnung seitens der zentralen Datenverarbeitungseinrichtung (6) und/oder des mobilen Endgeräts (3) wenn sich das mobile Endgerät (3) in einem als sicherheitskritisch eingestuften Bereich der industriellen Anlage (2) befindet.

## Claims

1. System (1) for monitoring, operating and servicing an industrial plant (2), particularly of the metal-producing industry or the steel industry, comprising:
at least one mobile terminal (3) with at least one sensor (4) for detection of measurement values within the industrial plant (2),
at least one position sensor (5) for detection of the position of the at least one mobile terminal (3) in the industrial plant (2),
a central data processing device (6) for processing the measurement values, which are detected by the at least one mobile terminal (3) by means of the at least one sensor (4), with consideration of the position, which is detected by means of the at least one position sensor (5), of the at least one mobile terminal (3) in the industrial plant (2), and
at least one communications network (7) for exchange of data between the at least one mobile terminal (3), the at least one position sensor (5) and/or the central data processing device (6),
wherein
the central data processing device (6) is configured to create an activity plan for the user (10) of the at least one mobile terminal (3) and to communicate it to the at least one mobile terminal (3) so as to provide the communicated activity plan to the user (10) of the at least one mobile terminal (3),
**characterised in that**
the activity plan is based on the detected measurement values and imparts to the user (10) instructions with respect to activities to be carried out in order to ensure or improve the operation of the industrial plant (2) or to service the industrial plant (2) and **in that**
the at least one mobile terminal (3) is configured to provide a communication between the industrial plant (2) and/or machines (9), units (9), parts (9) or other components (9) of the industrial plant (2) and the central data processing device (6), whereby the central data processing device (6) can directly configure the industrial plant (2) as a reaction to the detected measurement values.

2. System (1) according to claim 1,
further comprising a databank (8) with positional data stored therein of machines (9), units (9), parts (9) or other components (9) of the industrial plant (2), wherein the central data processing device (6) can assign the measurement values, which are detected by the at least one mobile terminal (3) by means of the at least one sensor (4), to a machine (9), a unit (9), a part (9) or other component (9) of the industrial plant (2) by comparison of the position, which is detected by means of the at least one position sensor (5), of the at least one mobile terminal (3) in the industrial plant (2) with the positional data stored in the databank (8).

3. System (1) according to claim 2,
wherein in addition dimensions of the machines (9), units (9), parts (9) or other components (9) of the industrial plant (2) are stored in the databank (8).

4. System (1) according to claim 2 or claim 3,
wherein the at least one position sensor (5) is integrated in the at least one mobile terminal (3).

5. System (1) according to any one of claims 1 to 4,
wherein the sensor (4) of the at least one mobile terminal (3) is a camera, a thermal-imaging camera, a gas measuring instrument, a temperature measuring instrument, a pressure measuring instrument, a distance measuring instrument or a comparable sensor (4).

6. System (1) according to any one of claims 1 to 5,
wherein the at least one sensor (4) is integrated in the mobile terminal (3) or connectible therewith.

7. System (1) according to any one of claims 1 to 6,
wherein construction plans, measurement data histories, maintenance data, fault reports, order lists and/or the like with respect to the industrial plants (2) and/or machines (9), units (9), parts (9) or other components (9) of the industrial plant (2) are stored in the central data processing device (6).

8. Method for monitoring, operating and servicing an industrial plant (2), particularly of the metal-producing industry or the steel industry, comprising the steps:
detection of measurement values within the industrial plant (2) by means of a mobile terminal (3),
detection of the position of the mobile terminal (3) in the industrial plant (2) at the instant of measurement value detection,
communication of the detected measurement values and the associated detected positions by the mobile terminal (3) to a central data processing device (6),
processing of the detected measurement values with consideration of the associated detected positions by the central data processing device (6), particularly assignment of the measurement values to sections of the industrial plant (2),
creation of an activity plan for the user (10) of the mobile terminal (3) by the central data processing device (6) and communication of the created activity plane to the mobile terminal (3) so as to provide the communicated activity plan to the user (10) of the mobile terminal (3),
**characterised by**
basing of the activity plan on the detected measurement values and imparting to the user (10) instructions with respect to activities to be performed so as to ensure or improve operation of the industrial plant (2) or service the industrial plant (2) and by i transmission of data from the central data processing device (6) by way of the mobile terminal (3) to the industrial plant (2) and/or machines (9), units (9), parts (9) or other components (9) of the industrial plant (2), whereby the central data processing device (6) can directly configure the industrial plant (2) as a reaction to the detected measurement values.

9. Method according to claim 8,
further comprising the steps:
storage of positional data of machines (9), units (9), parts (9) or other components (9) of the industrial plant (2),
comparison of the detected positions with the stored positional data and
assignment of the detected measurement values to the machines (9), units (9), parts (9) or other components (9) of the industrial plant (2) on the basis of the comparison of the positional data.

10. Method according to claim 9,
wherein the dimensions of the machines (9), units (9), parts (9) or other components (9) of the industrial plant (2) are stored in addition to the positional data.

11. Method according to any one of claims 8 to 10,
wherein the communication of the detected measurement values and the detected associated positions is carried out in real time.

12. Method according to any one of claims 8 to 11,
further comprising the step of carrying out an inspection of the industrial plant (2) along a predetermined path (11) through the industrial plant (2) and detection of measurement values at predetermined positions within the industrial plant (2).

13. Method according to any one of claims 8 to 12,
further comprising the step of continuous monitoring of the position of the mobile terminal (3) in the industrial plant (2), particularly comprising the step of indicating a warning on the part of the central data processing device (6) and/or the mobile terminal (3) if the mobile terminal (3) is present in a region, which is classified as safety-critical, of the industrial plant (2).

## Revendications

1. Système (1) pour surveiller, exploiter et entretenir une installation industrielle (2), en particulier dans l'industrie de la production de métaux ou de l'industrie sidérurgique, comprenant :
au moins un appareil mobile (3) avec au moins un capteur (4) pour la capture de valeurs de mesure à l'intérieur de l'installation industrielle (2),
au moins un capteur de position (5) pour détecter la position de l'au moins un appareil mobile (3) dans l'installation industrielle (2),
un dispositif central de traitement des données (6) pour traiter les valeurs de mesure capturées par l'au moins un appareil mobile (3) à l'aide de l'au moins un capteur (4), en tenant compte de la position capturée par l'au moins un capteur de position (5) de l'au moins un appareil mobile (3) dans l'installation industrielle (2), et
au moins un réseau de communication (7) pour l'échange de données entre l'au moins un appareil mobile (3), l'au moins un capteur de position (5) et/ou le dispositif central de traitement des données (6),
dans lequel
le dispositif central de traitement des données (6) est conçu pour créer un plan d'activité pour l'utilisateur (10) de l'au moins un appareil mobile (3) et pour le transmettre à l'au moins un appareil mobile (3), afin de fournir le plan d'activité transmis à l'utilisateur (10) de l'au moins un appareil mobile (3),
**caractérisé en ce que**
le plan d'activité est basé sur les valeurs de mesure capturées et donne à l'utilisateur (10) des indications sur les activités à réaliser pour assurer ou améliorer le fonctionnement de l'installation industrielle (2) ou pour entretenir l'installation industrielle (2), et **en ce que**
l'au moins un appareil mobile (3) est conçu pour fournir une communication entre l'installation industrielle (2) et/ou les machines (9), les unités (9), les composants (9) ou autres constituants (9) de l'installation industrielle (2) et le dispositif central de traitement des données (6), permettant ainsi au dispositif central de traitement des données (6) de configurer directement l'installation industrielle (2) en réponse aux valeurs de mesure capturées.

2. Système (1) selon la revendication 1,
comprenant également une base de données (8) contenant les données de position enregistrées des machines (9), des unités (9), des composants (9) ou d'autres constituants (9) de l'installation industrielle (2), dans lequel le dispositif central de traitement des données (6) peut attribuer les valeurs de mesure capturées par l'au moins un appareil mobile (3) à l'aide de l'au moins un capteur (4) en comparant la position capturée par l'au moins un capteur de position (5) de l'au moins un appareil mobile (3) dans l'installation industrielle (2) avec les données de position enregistrées dans la base de données (8) à une machine (9), à une unité (9), à un composant (9) ou à un autre composant (9) de l'installation industrielle (2).

3. Système (1) selon la revendication 2,
dans lequel la base de données (8) contient également les dimensions des machines (9), des unités (9), des composants (9) ou d'autres constituants (9) de l'installation industrielle (2).

4. Système (1) selon la revendication 2 ou la revendication 3,
dans lequel l'au moins un capteur de position (5) est intégré dans l'au moins un appareil mobile (3).

5. Système (1) selon l'une quelconque des revendications 1 à 4,
dans lequel le capteur (4) de l'au moins un appareil mobile (3) est une caméra, une caméra thermique, un appareil de mesure de gaz, un appareil de mesure de température, un appareil de mesure de pression, un appareil de mesure de distance ou un capteur similaire (4).

6. Système (1) selon l'une quelconque des revendications 1 à 5,
dans lequel l'au moins un capteur (4) est intégré dans l'appareil mobile (3) ou peut être connecté à celui-ci.

7. Système (1) selon l'une quelconque des revendications 1 à 6,
dans lequel le dispositif central de traitement des données (6) et/ou la base de données (8) contiennent des plans de construction, des historiques de données de mesure, des informations de maintenance, des rapports d'erreur, des listes de commande et/ou des informations similaires concernant l'installation industrielle (2) et/ou les machines (9), les unités (9), les composants (9) ou d'autres constituants (9) de l'installation industrielle (2).

8. Procédé pour surveiller, exploiter et entretenir une installation industrielle (2), en particulier dans l'industrie de la production de métaux ou de l'industrie sidérurgique, comprenant les étapes suivantes :
capturer des valeurs de mesure à l'intérieur de l'installation industrielle (2) à l'aide d'un appareil mobile (3),
capturer la position de l'appareil mobile (3) dans l'installation industrielle (2) au moment de la capture des valeurs de mesure,
transmettre les valeurs de mesure capturées et les positions capturées associées de l'appareil mobile (3) à un dispositif central de traitement des données (6),
traiter les valeurs de mesure capturées en tenant compte des positions capturées associées par le dispositif central de traitement des données (6), en particulier attribuer les valeurs de mesure à des parties de l'installation industrielle (2),
créer un plan d'activité pour l'utilisateur (10) de l'appareil mobile (3) par le dispositif central de traitement des données (6) et transmettre le plan d'activité créé à l'appareil mobile (3), afin de fournir le plan d'activité transmis à l'utilisateur (10) de l'au moins un appareil mobile (3),
**caractérisé par**
baser le plan d'activité sur les valeurs de mesure capturées et donner à l'utilisateur (10) des indications sur les activités à réaliser pour assurer ou améliorer le fonctionnement de l'installation industrielle (2) ou pour entretenir l'installation industrielle (2), et **par**
transférer des données du dispositif central de traitement des données (6) via l'appareil mobile (3) à l'installation industrielle (2) et/ou aux machines (9), aux unités (9), aux composants (9) ou à d'autres constituants (9) de l'installation industrielle (2), permettant ainsi au dispositif central de traitement des données (6) de configurer directement l'installation industrielle (2) en réponse aux valeurs de mesure capturées.

9. Procédé selon la revendication 8,
comprenant également les étapes suivantes :
enregistrer les données de position des machines (9), des unités (9), des composants (9) ou d'autres constituants (9) de l'installation industrielle (2),
comparer les positions capturées avec les données de position enregistrées, et
attribuer les valeurs de mesure capturées aux machines (9), aux unités (9), aux composants (9) ou à d'autres constituants (9) de l'installation industrielle (2) sur la base de la comparaison des données de position.

10. Procédé selon la revendication 9,
dans lequel, en plus des données de position, les dimensions des machines (9), des unités (9), des composants (9) ou d'autres constituants (9) de l'installation industrielle (2) sont enregistrées.

11. Procédé selon l'une quelconque des revendications 8 à 10,
dans lequel la transmission des valeurs de mesure capturées et des positions capturées associées se fait en temps réel.

12. Procédé selon l'une quelconque des revendications 8 à 11,
comprenant également l'étape de réaliser une inspection de l'installation industrielle (2) le long d'un chemin prédéfini (11) à travers l'installation industrielle (2) et de capturer des valeurs de mesure à des positions prédéfinies à l'intérieur de l'installation industrielle (2).

13. Procédé selon l'une quelconque des revendications 8 à 12,
comprenant également l'étape de surveiller en continu la position de l'appareil mobile (3) dans l'installation industrielle (2), en particulier comprenant l'étape d'afficher un avertissement de la part du dispositif central de traitement des données (6) et/ou de l'appareil mobile (3) si l'appareil mobile (3) se trouve dans une zone considérée comme critique pour la sécurité de l'installation industrielle (2).
